# EUROPEAN PATENT APPLICATION

(11) **EP 2 386 724 A2**
(43) Date of publication of application: **16.11.2011**
(21) Application number: 11165069.3
(22) Date of filing: 06.05.2011
(51) Int. Cl.: F01D 11/02, F16J 15/447

(54) **Rotary machine with a labyrinth seal with curved teeth**

(30) Priority: 11.05.2010 US 777868
(71) Applicant: General Electric Company, Schenectady, NY 12345 (US)
(72) Inventor: Garg, Umesh, 560066, Bangalore, Karnataka (IN); Kumar, Senthil, 560066, Bangalore, Karnataka (IN); Modachur Krishnan, Prabakaran, 560066, Bangalore, Karnataka (IN)
(74) Representative: Gray, Thomas

(57) **Abstract**

In one embodiment, a system includes a rotary machine (12) and a packing seal (62) that is disposed between rotary and stationary components of the rotary machine. The packing seal (62) includes a pair of seal lands (80) spaced axially (66) along the rotary component and a seal tooth (74) disposed at an axial position between the pair of seal lands (80). At least one seal land (80) of the pair of seal lands (80) or the seal tooth (74) includes a curved flow-facing side (90, 92) and is slanted toward the curved flow-facing side (90, 92).

## Description

### BACKGROUND OF THE INVENTION

The subject matter disclosed herein relates to packing seals, and more specifically, to curved labyrinth packing seals used in rotary machines.

In general, packing seals may be employed between rotating and stationary parts in rotary machines, such as steam turbines, gas turbines, generators, and compressors. The rotary machines may flow a fluid between one or more stages of rotating components to generate power or to compress the fluid. Packing seals may be located between the stages, at the entrance to the stages, and/or at the exit to the stages to reduce leakage of fluid between fixed and rotating components. Packing seals generally include a series of teeth that interface with seal lands to form restrictions to inhibit flow of fluid. However, fluid may flow through the interface towards areas of lower pressure, which can result in greater leakage.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a rotary machine and a packing seal disposed between rotary and stationary components of the rotary machine. The packing seal includes a pair of seal lands spaced axially along the rotary component and a seal tooth disposed at an axial position between the pair of seal lands. At least one seal land of the pair of seal lands or the seal tooth comprises a curved flow-facing side and is slanted toward the curved flow-facing side.

In a second embodiment, a system includes a rotor with an annular seal land configured to align with a packing ring in a turbine engine to form a packing seal between rotary and stationary components of a rotary machine. The annular seal land includes a tip configured to extend toward the packing ring to form a small clearance between the tip and the packing ring, a flow-facing side extending between the surface of the rotor and tip, and a backside extending between a surface of the rotor and the tip. The annular seal land is angled towards the flow-facing side and the flow-facing side includes a concave curve.

In a third embodiment, a system includes a rotary machine and a packing seal disposed between a rotary component of the rotary machine and a stationary component of the rotary machine. The packing seal includes a seal land extending radially from a first surface of the rotary component toward the stationary component and a seal tooth extending radially from a second surface of the stationary component towards the rotary component. The seal land includes a land flow-facing side and a land backside connected to each other at a land tip. The seal land is slanted towards the land flow-facing side with respect to the first surface, and the land flow-facing side includes a first concave curve.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic flow diagram of an embodiment of a combined cycle power generation system having a gas turbine and a steam turbine that may employ packing seals;
FIG. 2 is a cross-sectional side view of an embodiment of the steam turbine of FIG. 1;
FIG. 3 is a cross-sectional view of an embodiment of one of the packing seals of FIG. 2;
FIG. 4 is a cross-sectional view of a portion of the packing seal of FIG. 3 taken within line 4-4 of FIG. 3;
FIG. 5 is a cross-sectional view of an embodiment of a packing seal with curved seal lands and straight seal teeth;
FIG. 6 is a cross-sectional view of an embodiment of a packing seal with straight slanted seal lands and curved seal teeth;
FIG. 7 is a cross-sectional view of an embodiment of a packing seal with curved seal lands and curved seal teeth;
FIG. 8 is a cross-sectional view of another embodiment of a packing seal with curved seal lands and curved seal teeth; and
FIG. 9 is a cross-sectional view of an embodiment of a packing seal with a seal tooth that is curved on both the flow-facing side and the backside.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed to labyrinth packing seals with curved seal lands and/or curved seal teeth. Packing seals generally include a packing ring that surrounds a rotor to separate high-pressure and low-pressure regions within a rotary machine, such as a steam turbine, gas turbine, compressor, or generator. Seal teeth may extend radially inwards from the packing seals toward the rotor while seal lands extend radially outward from the rotor. The seal teeth and the seal lands may be arranged in a labyrinth configuration where the seal teeth and seal lands alternate with one another to form chambers that convert kinetic energy of a fluid flowing through the seal to pressure energy. The seal lands and/or the seal teeth may be curved against the direction of flow to impede the flow of fluid through the packing seals, which in turn may minimize leakage of the fluid from high-pressure regions to low-pressure regions.

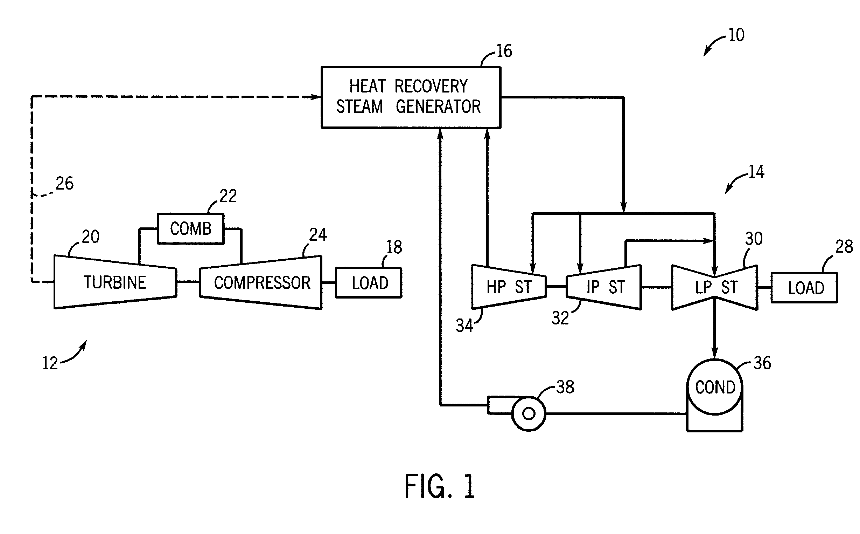

FIG. 1 is a schematic flow diagram of an embodiment of a combined cycle power generation system 10 that may utilize packing seals with curved seal lands and/or curved seal teeth. The system 10 may include a gas turbine 12, a steam turbine 14, and a heat recovery steam generation (HRSG) system 16. Within the gas turbine 12, gas, such as syngas, may be combusted to generate power within a "topping," or Brayton, cycle. Exhaust gas from the gas turbine 12 may be supplied to the HRSG system 16 to generate steam within a "bottoming," or Rankine, cycle. In certain embodiments, the gas turbine 12, the steam turbine 14, and the HRSG system 16 may be included within an integrated gasification combined cycle (IGCC) power plant.

The gas turbine 12 may generally combust a fuel (e.g., liquid and/or gas fuel) to drive a first load 18. The first load 18 may, for instance, be an electrical generator for producing electrical power. The gas turbine 12 may include a turbine 20, a combustor or combustion chamber 22, and a compressor 24. Exhaust gas 26 from the gas turbine 20 may be used to generate steam supplied to steam turbine 14 (through the HRSG system 16) for driving a second load 28. The second load 28 also may be an electrical generator for generating electrical power. However, both the first and second loads 18 and 28 may be other types of loads capable of being driven by the gas turbine 12 and steam turbine 14. Further, although the gas turbine 12 and steam turbine 14 are depicted as driving separate loads 18 and 28, the gas turbine 12 and steam turbine 14 also may be utilized in tandem to drive a single load via a single shaft. In the illustrated embodiment, the steam turbine 14 may include one low-pressure section 30 (LP ST), one intermediate-pressure section 32 (IP ST), and one high-pressure section 34 (HP ST). However, the specific configuration of the steam turbine 14, as well as the gas turbine 12, may be implementation-specific and may include any combination of sections.

The system 10 also includes the HRSG system 16 for employing heat from the gas turbine 12 to generate steam for the steam turbine 14. The HRSG system 16 may include components such as evaporators, economizers, heaters, superheaters, and attemperators, among others, that are used to generate a high-pressure, high-temperature steam. The steam produced by the HRSG system 16 may be supplied to the low-pressure section 30, the intermediate pressure section 32, and the high-pressure section 34 of the steam turbine 14 for power generation. Exhaust from the low-pressure section 30 may be directed into a condenser 36. Condensate from the condenser 36 may, in turn, be returned to the HRSG system 16 with the aid of a condensate pump 38. Within the HRSG system 16, the condensate may then be reheated to generate steam for the steam turbine 14.

The curved labyrinth seals described herein may be employed between rotary and stationary components within the combined cycle power generation system 10. For example, the curved labyrinth seals may be employed in the gas turbine 20, the compressor 24, the high-pressure steam turbine 34, the intermediate pressure steam turbine 32, the low-pressure steam turbine 30, and/or within the HRSG system 16. Moreover, the combined cycle power generation system 10 is provided by way of example only and is not intended to be limiting. The curved labyrinth seals described herein may be used in rotary machines, such as the gas turbine 12 and the steam turbine 14, employed in any suitable application. Further, in other embodiments, the curved labyrinth seals may be used in independent rotary machines. For example, the curved labyrinth seals may be used in a gas turbine, steam turbine, compressor, or generator that is part of a simple cycle system.

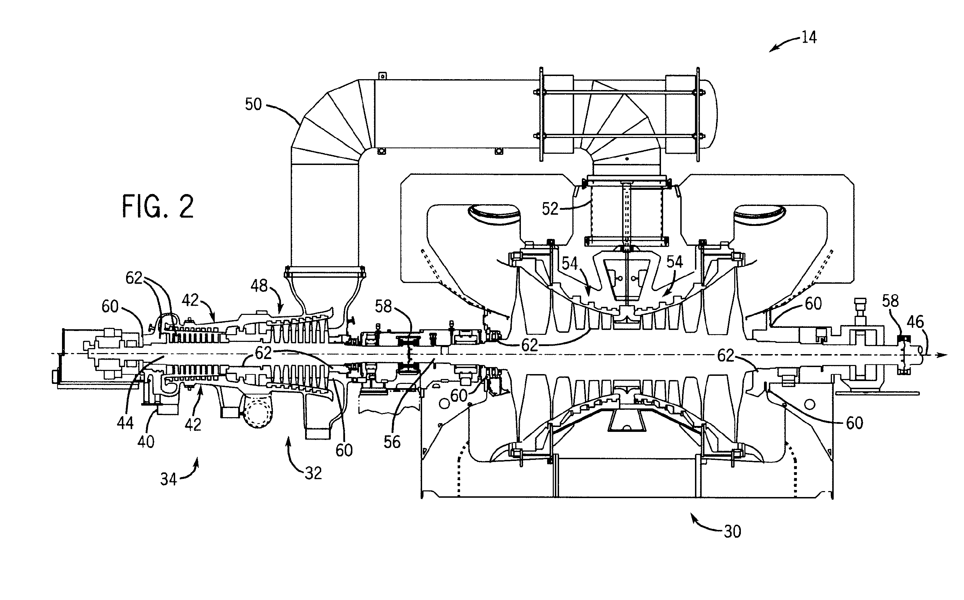

FIG. 2 depicts an embodiment of the steam turbine 14 that includes the high-pressure-section 34, the intermediate-pressure section 32, and the low-pressure section 30 of FIG. 1. The steam turbine 14 includes a main steam inlet port 40 that may receive steam, for example, from the HRSG system 16 of FIG. 1. The steam may flow through a series of stages 42 that include circumferentially spaced blades mounted on a shaft 44 that rotates about an axis 46. From the high-pressure section 34, the steam may enter the intermediate-pressure section 32 and flow through another series of stages 48 that include circumferentially spaced blades mounted on the shaft 44. In certain embodiments, the steam may undergo heating before flowing into the intermediate-pressure section 32.

From the intermediate-pressure section 32, the steam may flow to the low-pressure section 30 through a crossover pipe 50 and an inlet box 52. Within the low-pressure section 30, the steam may flow in opposite axial directions through a series of stages 54 that include circumferentially spaced blades mounted on a shaft 56 that rotates about the axis 46. The shaft 56 may include flanges 58 disposed on axially opposite ends to couple the shaft 56 to the shaft 44 on one end, and to couple the shaft 56 to a generator shaft (not shown) on the other end.

Packing casings 60 may be included within the high-pressure section 34, the intermediate pressure section 32, and the low-pressure section 30 to minimize the leakage of steam around and/or between the stages 42, 48, and 54. Specifically, the packing casings 60 may include axially spaced stationary shells encircling the rotational axis 46 that include packing seals 62 extending radially inward toward the rotational axis 46. The packing seals 62 may include teeth disposed axially between seal lands projecting from the shafts 44 and 56 to create a tortuous path through the packing seals 62, thereby minimizing leakage of steam. The seal lands may project directly from the shafts 44 and 56 or may project from support structures, such as rotor disks or seal arms, that extend radially outward from the shafts 44 and 56.

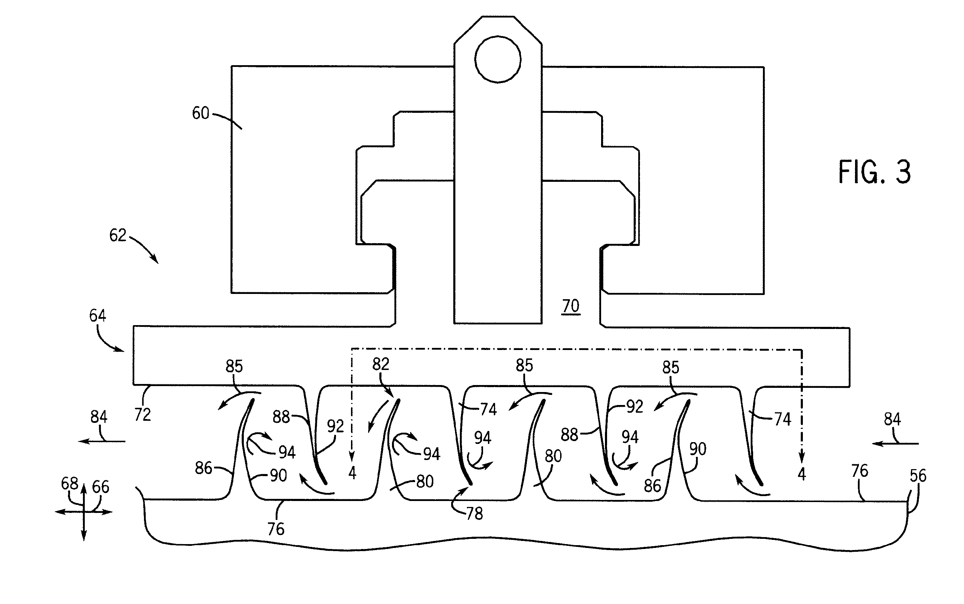

FIG. 3 depicts an embodiment of one of the packing seals 62 located within the intermediate pressure section 32 shown in FIG. 2. Although the packing seal 62 is shown within the context of a steam turbine, the packing seals described herein may be employed within any suitable rotary machine, such as a gas turbine, compressor, steam turbine, or generator, among others. Further, the packing seals 62 may be located between stages or proximate to an inlet and/or outlet for the stages.

The packing seal 62 includes the packing casing 60 that encircles the shaft 56. A packing ring 64 is mounted to the packing seal 62 to surround the shaft 56. Although only one packing ring 64 is illustrated, in certain embodiments, multiple packing rings 64 may be axially spaced (direction 66) between stages within a rotary machine. Each packing ring 64 includes an annular array of arcuate seal segments 70, extending radially (direction 68) towards the shaft 56 from the packing casing 60. Each seal segment 70 includes an annular sealing surface 72 with annular seal teeth 74 that project radially (direction 68) toward a surface 76 of the shaft 56. The surface 76 may be disposed generally opposite of the sealing surface 72. Small clearances 78 may exist between the seal teeth 74 and the surface 76 of the shaft 56 to restrict the flow of a fluid, such as steam, through the packing seal 62. The seal teeth 74 may be disposed between seal lands 80 that project radially outward (direction 68) from the surface 76 of the shaft 56 toward the sealing surface 72 of the packing ring 64. Small clearances 82 also may exist between the seal lands 80 and the sealing surface 72 to restrict the flow of the fluid through the packing seal 62.

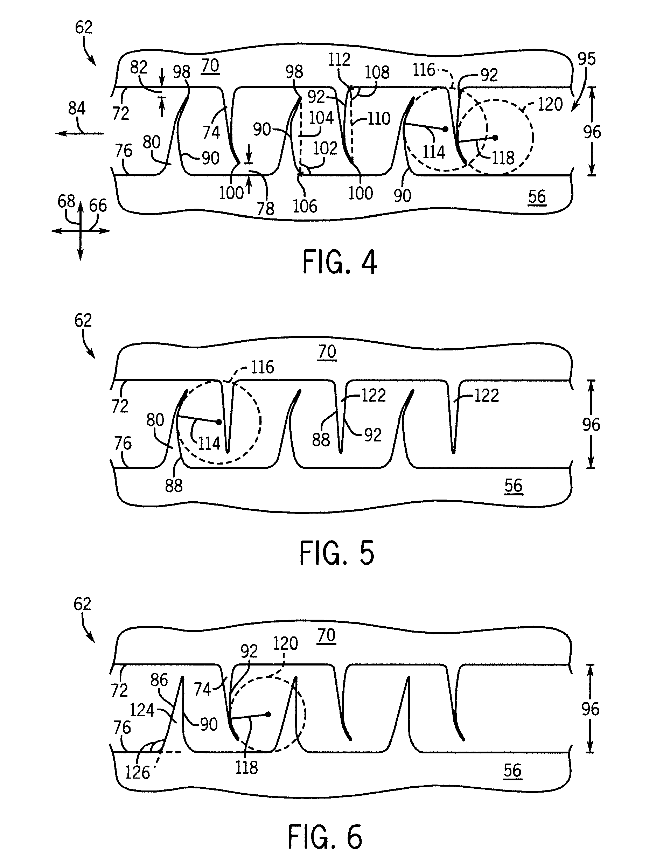

The fluid may flow through the packing seal 62 in a flow direction 84 flowing alternately through clearances 82 and 78, as generally indicated by arrows 85. Each of the seal lands 80 and seal teeth 74 may have a backside 86 and 88, respectively, and a flow-facing side 90 and 92, respectively. As the fluid flows through the packing seal 62, the fluid may first contact or flow past the flow-facing sides 90 and 92, flow through the clearances 82 and 78, and then contact or flow past the backsides 86 and 88. As described further with respect to FIG. 4, the seal lands 80 and the seal teeth 74 may be curved towards the flow-facing sides 90 and 92 and against the flow direction 84 to impede the flow of fluid through the packing seal 62. The curve of the seal lands 80 and the seal teeth 74 may reverse the flow of fluid that attempts to flow through the packing seal 62 (i.e. in the flow direction 84). For example, as the fluid contacts the flow-facing sides 90 and 92, the curvature of the flow-facing sides 90 and 92 may reverse the fluid flow, as generally indicated by arrows 94, to impede the flow of fluid through the packing seal 62.

The seal lands 80 and the seal teeth 74 also may be slanted against the flow direction 84, as described further with respect to FIG. 4, which also may reverse the fluid flow to impede the flow of fluid through the packing seal 62. Further, in certain embodiments, the curvature and/or the slant of the flow-facing sides 90 and 92 may create vortexes and/or eddies designed to inhibit flow of the fluid through the packing seal 62. Arrows 85 and 94 are intended to generally indicate the flow of the fluid and are not intended to be limiting. For example, in other embodiments, the shape of the flow, eddies, and/or vortexes within the packing seal 62 may vary.

FIG. 4 depicts a portion of the packing seal 62 taken within line 4-4 of FIG. 3. The seal lands 80 and the seal teeth 74 extend radially (direction 68) within a cavity 95 that is formed by the seal segment 70 and the rotor shaft 56. The cavity 95 may be an annular cavity that encircles the rotor shaft 56 and that has a height 96 generally defined as the distance between the sealing surface 72 and the shaft surface 76. The seal lands 80 may project upwards from the shaft surface 76 and may include a tip 98 that extends towards the sealing surface 72. The small clearances 82 between the tips 98 of the seal lands 80 and the sealing surface 72 may inhibit the flow of fluid through the packing seal 62 in the axial direction 66. The seal teeth 74 may project radially (direction 68) toward the surface 76 of the shaft 56. The seal teeth 74 each include a tip 100 that extend towards the surface 76. The small clearances 78 between the tips 100 of the seal teeth 74 and the surface 76 may inhibit the flow of fluid through the packing seal 62 in the axial direction 66.

According to certain embodiments, the seal lands 80 and the seal teeth 74 may be slanted towards the flow-facing sides 90 and 92, respectively, and against the flow direction 84. For example, the seal lands 80 may be slanted against the flow direction 84 at a slant angle 102. The slant angle 102 may be generally defined as the angle between the surface 76 of the shaft 56 and a chord 104 that intersects the flow-facing side 90 at two separate points. In particular, the chord 104 may intersect the flow-facing side 90 at the axial center of the tip 98 and at an intersection point 106 between the flow-facing side 90 and the surface 76. According to certain embodiments, the slant angle 102 may be between approximately 45 and 90 degrees, and all subranges therebetween. Further, in certain embodiments, the slant angle 102 may be approximately 50, 60, 65, 70, 75, 80, or 85 degrees. Due to the slant angle 102, the tip 98 of a seal land 80 may be located at an axial position upstream with respect to the flow direction 84 from the intersection point 106. Accordingly, the slant angle 102 may generally impede flow of the fluid through the packing seal 62, as described above with respect to FIG. 3.

The seal teeth 74 also may be slanted against the flow direction 84 at a slant angle 108. Similar to the slant angle 102, the slant angle 108 may be generally defined as the angle between surface 72 and a chord 110 that intersects the flow-facing side 92 at two separate points. In particular, the chord 110 may intersect the flow-facing side 92 at the axial center of the tip 100 and at an intersection point 112 between the flow-facing side 92 and the surface 72. According to certain embodiments, the slant angle 108 may be between approximately 45 and 90 degrees, and all subranges therebetween. Further, in certain embodiments, the slant angle may be approximately 50, 55, 60, 65, 70, 75, 80, or 85 degrees. Due to the slant angle 108, the tip 100 of a seal tooth 74 may be located at an axial position upstream from the intersection point 112 with respect to the flow direction 84. Accordingly, the slant angle 108 may generally impede flow of the fluid in through the packing seal 62, as described above with respect to FIG. 3.

The seal teeth 74 and the seal lands 80 also may be curved against the flow direction 84. In particular, the flow-facing sides 90 and 92 may each include a concave curve that may reverse the flow of fluid to return inhibit the flow of fluid through the packing seal 62 in the flow direction 84, as generally described above with respect to FIG. 3. For example, the flow-facing sides 90 of the seal lands 80 each may have a radius of curvature 114. The radius of curvature 114 may generally be defined as the radius of an osculating circle 116 whose center lies of the inner normal line of the flow-facing side 90. The flow-facing side 92 of the seal teeth 74 also may have a radius of curvature 118 that may generally be defined as the radius of an osculating circle 120 whose center lies of the inner normal line of the flow-facing side 92. As shown, the curved flow-facing sides 90 and 92 include a continuous curve from the tip 98 or 100 to the surface 76 or 70. However, in other embodiments, the curve of the flow-facing sides 90 and 92 may include several (e.g., 2 to 100) discrete angled surfaces that combine together to form the curved flow-facing sides 90 and 92.

According to certain embodiments, the radius of curvature 114 of the seal lands 80 may be the same or different from the radius of curvature 118 of the seal teeth 74. Further, in certain embodiments, the radius of curvature 114 may vary between the seal lands 80 and/or the radius of curvature 118 may vary between the seal teeth 74. According to certain embodiments, the ratio of the radius of curvature 114 for the seal lands 80 to the cavity height 96 may be less than one. The ratio of the radius of curvature 118 for the seal teeth 74 to the cavity height 96 also may be less than one.

In other embodiments, some or all of the seal lands 80 and/or the seal teeth 74 may have flow-facing sides 90 and 92 that are straight rather than curved. For example, FIG. 5 depicts another embodiment of the packing seal 62 that includes seal teeth 122 with relatively straight backsides 88 and flow-facing sides 92. The seal teeth 122 are disposed axially between the seal lands 80 with the curved flow-facing sides 90. In certain embodiments, the seal teeth 122 may be slanted against the flow direction 84, as described above with respect to FIG. 4.

FIG. 6 depicts an embodiment of the packing seal 62 that includes seal lands 124 with relatively straight backsides 86 and flow-facing sides 90. The seal lands 124 are disposed axially between the seal teeth 74 that include curved flow-facing sides 92. Although straight, the backsides 86 may be slanted at an angle 126 relative to the surface 76. According to certain embodiments, the angle 126 may be approximately 90 to 135 degrees, and all subranges therebetween. Further, in certain embodiments, the angle 126 may be approximately 95, 100, 105, 110, 115, 120, 125, or 130 degrees.

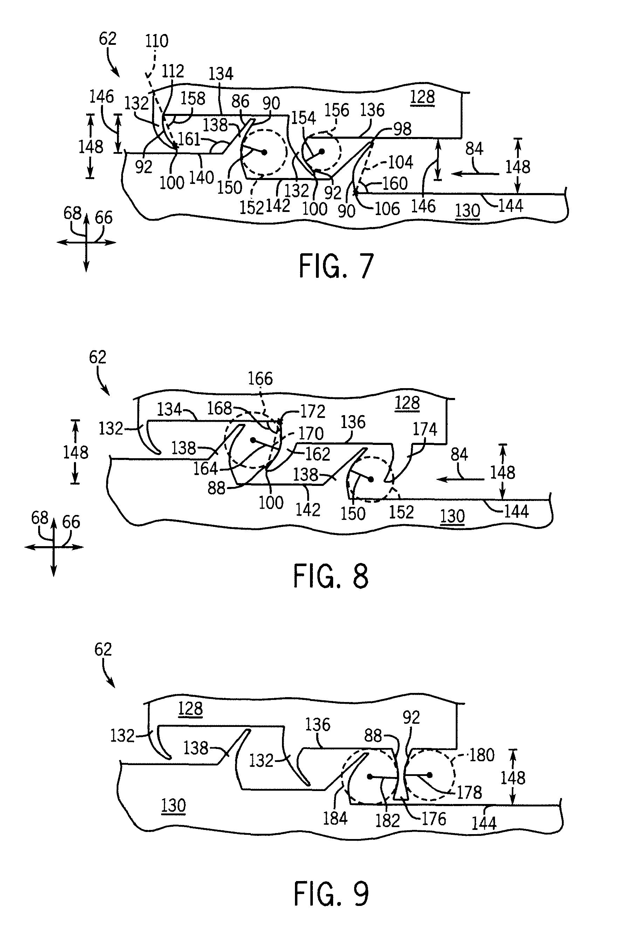

As shown in FIGS. 4 through 6, the seal and rotor surfaces 72 and 76 are relatively flat to produce a relatively uniform cavity height 96 throughout the packing seal 62. In other words, each of the seal and rotor surfaces 72 and 76 are located at a relatively constant radial location along the axis 46 (FIG. 2) of the steam turbine 14. However, in other embodiments, the surfaces 72 and 76 may be stepped surfaces that change radial positions along the axis 46. For example, FIGS. 7 through 9 depict embodiments of the packing seal 62 that include a stepped seal segment 128 and a stepped support structure 130. In certain embodiments, the support structure may be coupled to the shaft 56 and may extend radially outward from the shaft 56. However, in other embodiments, the support structure 130 may be an integral part of the shaft 56 or may be disposed along the surface of the shaft 56. According to certain embodiments, the support structure 130 may include a rotor disk or a seal arm.

The packing seal 62 includes seal teeth 132 that extend radially (direction 68) towards the support structure 130 from the seal segment 128. The seal segment 128 may include stepped surfaces 134 and 136 that change in height axially (direction 66) along the seal segment 128. According to certain embodiments, a seal tooth 132 may be disposed at the transition between the stepped surfaces 134 and 136. The seal lands 138 may extend radially (direction 68) towards the seal segment 128 from the support structure 130. The support structure 130 includes surfaces 140, 142, and 144 that are stepped to change in height axially (direction 66) along the support structure 130. According to certain embodiments, the step in the support structure 130 may be approximately the same height change as the step in the seal segment 128. Further, seal lands 138 may be disposed at the transitions between the stepped surfaces 140, 142, and 144.

The stepped seal segment 128 and the stepped support structure 130 may create different cavity heights 146 and 148 within the packing seal 62. In particular, the seal teeth 132 may extend into a cavity of a height 146, while the seal lands may extend into a cavity of a height 148. The cavity heights 146 and 148 for the seal teeth 132 and the seal lands 138 may generally be measured as the height between the surfaces that interface with the flow-facing sides 92 and 90. According to certain embodiments, the stepped surfaces 128 and 130 may provide a more tortuous path for fluid flow through the packing seal 62, thereby further inhibiting the flow of fluid through the packing seal 62.

As shown in FIG. 7, the seal teeth 132 and the seal lands 138 may have curved flow-facing sides 90 and 92. For example, the seal lands 138 may have a radius of curvature 150, as generally shown by the osculating circle 152. According to certain embodiments, the ratio of the radius of curvature 150 to the height 148 may be less than one. The seal teeth 132 may have a radius of curvature 154, as generally shown by the osculating circle 156. According to certain embodiments, the ratio of the radius of curvature 158 to the height 146 may be less than one. Further, in certain embodiments, the flow-facing sides 90 and 92 may include a concave curve that extends form the tip 98 or 100 to the surface 134, 136, 140, 142, or 144.

The flow-facing sides 90 and 92 also may be slanted in the flow direction 84. For example, the seal teeth 132 may be slanted in the flow direction 84 at a slant angle 158. The slant angle 158 may be generally defined as the angle between the surface 134 that intersects the flow-facing side 92 and a chord 110 through the tip 100 of the seal tooth 132 and the intersection point 112 between the flow-facing side 92 and the surface 134. The seal lands 138 may be slanted against the flow direction 84 at a slant angle 160. The slant angle 160 may be generally defined as the angle between the surface 144 that intersects the flow-facing side 90 and a chord 104 through the tip 98 of the seal land 138 and the intersection point 106 between the flow-facing side 90 and the surface 144. According to certain embodiments, the slant angles 158 and 160 may be between approximately 45 and 90 degrees, and all subranges therebetween. Further, in certain embodiments, the slant angles 158 and 160 may be approximately 50, 60, 65, 70, 75, 80 or 85 degrees.

The seal lands 138 also may have slanted backsides 86. For example, the backsides 86 may be slanted in the flow direction 84 at an angle 161 of approximately 90 to 135 degrees, and all subranges therebetween. Further, in certain embodiments, the slant angle 161 may be approximately 90, 95, 100, 105, 110, 115, 120, 125, 130, or 135 degrees.

FIG. 8 depicts another embodiment of the packing seal 62 that include a seal tooth 162 that is curved in the flow direction 84, rather than against the flow direction 84. In particular, the seal tooth 162 includes a backside 88 that has a radius of curvature 164 as generally defined by the radius of curvature of the osculating circle 166. The seal tooth 162 curves in the flow direction 84 while the seal lands 138 curve against the flow direction 84, to form interlocking curved seal teeth 162 and seal lands 138. According to certain embodiments, the ratio of the radius of curvature 164 to the height 148 may be less than one.

The seal tooth 162 also may be slanted in the flow direction 84 at a slant angle 168. The slant angle 168 may be generally defined as the angle between the surface 134 that intersects the backside 88 and a chord 170 through the tip 100 of the seal tooth 132 and an intersection point 172 between the backside 88 and the surface 134. According to certain embodiments, the slant angle 168 may be between approximately 45 and 90 degrees, and all subranges therebetween. Further, in certain embodiments, the slant angle 168 may be approximately 50, 60, 65, 70, 75, 80 or 85 degrees.

The packing seal 62 shown in FIG. 8 also includes another seal tooth 174 that is curved in the flow direction 84. The seal tooth 174 is disposed axially (direction 66) upstream of the most downstream seal land 138 with respect to the flow direction 84 so that fluid flows past the seal tooth 174 when first entering the packing seal 62. However, in other embodiments, the seal tooth 174 may be omitted and the fluid may enter the packing seal 62 by flowing past a seal land 138, as shown in FIG. 7.

FIG. 9 depicts another embodiment of the packing seal 62, which includes a seal tooth 176 that is curved on both the backsides 88 and the flow-facing sides 92. The flow-facing side 92 may include a concave curve with a radius of curvature 178 as generally shown by the osculating circle 180. The backside 88 also may include a concave curve with a radius of curvature 182 as generally shown by the osculating circle 184. According to certain embodiments, the ratio between the radius of curvature 178 and the height 148 may be less than one, and the ratio between the radius of curvature 182 and the height 148 also may be less than one. In other embodiments, any number of seal teeth 176 that include curved backsides 88 and flow-facing sides 92 may be included within a packing seal 62.

A packing seal 62 may include any number and combination of the seal teeth and the seal lands described above with respect to FIGS. 4 through 9. For example, the relative numbers, shapes, sizes and/or geometries of the seal teeth and the seal lands may vary. According to certain embodiments, equal numbers of seal teeth and seal lands may be included within a packing seal 62. However, in other embodiments, an additional seal tooth may be included within the packing seal 62, as shown in FIG. 8, so that the fluid enters the packing seal 62 after flowing past a seal tooth. In another example, any number of curved seal teeth 74, curved seal lands 80, straight seal teeth 122, straight seal lands 124, and/or reverse curved seal teeth 162 may be included within a packing seal 62.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a rotary machine; and
   a packing seal disposed between rotary and stationary components of the rotary machine, wherein the packing seal comprises:
      a pair of seal lands spaced axially along the rotary component; and
      a seal tooth disposed at an axial position between the pair of seal lands;
      wherein at least one seal land of the pair of seal lands or the seal tooth comprises a curved flow-facing side and is slanted toward the curved flow-facing side.
2. The system of clause 1, wherein at least one of the pair of seal lands comprises the curved flow-facing side and is slanted toward the curved flow-facing side.
3. The system of clause 2, wherein the seal tooth comprises a straight flow-facing side.
4. The system of clause 1, wherein the seal tooth comprises the curved flow-facing side and is slanted toward the curved flow-facing side.
5. The system of clause 4, wherein each seal land of the pair of seal lands comprises a straight flow-facing side.
6. The system of clause 1, wherein the curved flow-facing side extends from a first surface to a tip configured to approach a second surface disposed opposite of the first surface to create a clearance between the tip and the second surface.
7. The system of clause 6, wherein the curved flow-facing side comprises a radius of curvature, and wherein a ratio of the radius of curvature to the distance between the first and second surface is less than one.
8. The system of clause 1, wherein the at least one seal land of the pair of seal lands or the seal tooth extends radially from a surface and is slanted toward the curved flow-facing side at an angle between approximately 45 degrees and approximately 90 degrees with respect to the surface.
9. A system, comprising:
   a rotor comprising an annular seal land configured to align with a packing ring in a turbine engine to form a packing seal between rotary and stationary components of a rotary machine, wherein the annular seal land comprises:
      a tip configured to extend toward the packing ring to form a clearance between the tip and the packing ring;
      a flow-facing side extending between the surface of the rotor and the tip; and
      a backside extending between a surface of the rotor and the tip opposite of the flow-facing side;
      wherein the annular seal land is angled towards the flow-facing side and the flow-facing side comprises a concave curve.
10. The system of clause 9, wherein the tip is disposed at an axial position upstream, with respect to flow through the packing seal, of an intersection point where the flow-facing side extends from the surface of the rotor.
11. The system of clause 9, wherein a chord that intersects an axial center of the tip and an intersection point where the flow-facing side extends from the surface of the rotor is disposed at an angle greater than approximately 45 degrees with respect to the surface.
12. The system of clause 9, wherein an angle between the backside and the surface of the rotor is greater than approximately 90 degrees.
13. The system of clause 9, wherein the surface of the rotor comprises a support structure that radially extends from the rotor.
14. A system, comprising:
   a rotary machine; and
   a packing seal disposed between a rotary component of the rotary machine and a stationary component of the rotary machine, wherein the packing seal comprises:
      a seal land extending radially from a first surface of the rotary component toward the stationary component; and
      a seal tooth extending radially from a second surface of the stationary component towards the rotary component;
      wherein the seal land comprises a land flow-facing side and a land backside connected to each other at a land tip, the seal land is slanted towards the land flow-facing side with respect to the first surface, and the land flow-facing side comprises a first concave curve.
15. The system of clause 14, wherein a chord intersecting the land flow-facing side at the land tip and the first surface intersects the first surface at an angle between approximately 45 degrees and approximately 90 degrees.
16. The system of clause 14, wherein the first concave curve comprises a radius of curvature, the first surface and the second surface are separated by a distance, and a ratio of the radius of curvature to the distance is less than 1.
17. The system of clause 14, wherein the seal tooth comprises a tooth flow-facing side and a tooth backside connected to each other at a tooth tip, the seal tooth is slanted towards the tooth flow-facing side with respect to the second surface, and the tooth flow-facing side comprises a second concave curve.
18. The system of clause 14, wherein the seal tooth comprises a tooth flow-facing side and a tooth backside connected to each other at a tooth tip, the seal tooth is slanted towards the tooth backside with respect to the second surface, the tooth backside comprises a second concave curve, and the tooth flow-facing side comprises a third concave curve.
19. The system of clause 14, wherein the first surface and the second surface change radial positions along a rotational axis of the rotary machine.
20. The system of clause 14, wherein the first surface and the second surface form a cavity therebetween that contains the seal land and the seal tooth, and wherein the cavity has a relatively constant height throughout the packing seal.

## Claims

1. A system, comprising:
a rotary machine (12); and
a packing seal (62) disposed between rotary and stationary components of the rotary machine, wherein the packing seal (62) comprises:
a pair of seal lands (80) spaced axially (66) along the rotary component; and
a seal tooth (74) disposed at an axial position between the pair of seal lands (80);
wherein at least one seal land (80) of the pair of seal lands (80) or the seal tooth (74) comprises a curved flow-facing side (90, 92) and is slanted toward the curved flow-facing side (90, 92).

2. The system of claim 1, wherein at least one of the pair of seal lands (80) comprises the curved flow-facing side (90) and is slanted toward the curved flow-facing side (90).

3. The system of claim 2, wherein the seal tooth comprises a straight flow-facing side.

4. The system of claim 1, wherein the seal tooth (74) comprises the curved flow-facing side (92) and is slanted toward the curved flow-facing side (92).

5. The system of claim 4, wherein each seal land of the pair of seal lands comprises a straight flow-facing side.

6. The system of claim 1, wherein the curved flow-facing side (90, 92) extends from a first surface (72, 76) to a tip (98, 100) configured to approach a second surface (76, 72) disposed opposite of the first surface (72, 76) to create a clearance (82, 100) between the tip (98, 100) and the second surface (76, 72).

7. The system of claim 4, wherein the curved flow-facing side (90, 92) comprises a radius of curvature (118, 114), and wherein a ratio of the radius of curvature to the distance (96) between the first and second surface is less than one.

8. The system of claim 1, wherein the at least one seal land (80) of the pair of seal lands (80) or the seal tooth (74) extends radially (68) from a surface (72, 76) and is slanted toward the curved flow-facing side (90, 92) at an angle (102, 108) between approximately 45 degrees and approximately 90 degrees with respect to the surface (72, 76).
